# EUROPÄISCHE PATENTSCHRIFT

(11) **EP 3 067 596 B1**
(45) Veröffentlichungstag und Bekanntmachung des Hinweises auf die Patenterteilung: **01.11.2017**
(21) Anmeldenummer: 15158428.1
(22) Anmeldetag: 10.03.2015
(51) Int. Cl.: F16K 1/44, F16K 3/24

(54) **DOPPELSITZ-ABSPERRVENTIL**
DOUBLE SEAT SHUT-OFF VALVE
VANNE D'ARRÊT À DOUBLE SIÈGE

(43) Veröffentlichungstag der Anmeldung: 14.09.2016
(73) Patentinhaber: OHL Gutermuth Industrial Valves GmbH, 63674 Altenstadt (DE)
(72) Erfinder: Röhrig, Wolfgang, 63768 Hösbach (DE)
(74) Vertreter: Quermann, Helmut

(56) Entgegenhaltungen:
- US-A- 2 117 044
- US-A- 2 998 027

## Beschreibung

Die Erfindung betrifft ein Doppelsitz-Absperrventil.

Das Doppelsitz-Absperrventil findet im Zusammenhang mit der Durchleitung und dem Absperren von Medien in den unterschiedlichsten Temperaturbereichen Verwendung. Es stellt sich, insbesondere bei sehr schwankenden Betriebstemperaturen oder großen Temperaturunterschieden zum normalen, abgekühlten Zustand des Absperrventils, das Problem, dass die Ventilsitze des Absperrventils gleichmäßig abdichten.

In der deutschen Offenlegungsschrift 1 938 832 ist ein Doppelsitzventil, das insbesondere für tiefe Temperaturen geeignet ist, beschrieben. Dieses weist ein Ventilgehäuse, einen Ventilkörper, eine Ventilspindel, eine Ventilspindelführung und einen Gehäusedeckel auf. Der Ventilkörper ist aus einem Stück hergestellt und besitzt ein nabenartiges Mittelteil sowie zwei je einen Ventilsitz aufnehmende ringförmige Teile und zwischen dem nabenartigen Mittelteil und den ringförmigen Teilen angeordnete Verbindungsteile in Form von Kegelstumpfhohlkörpern. Im Ventilgehäuse sind die beiden Gegenventilsitze angeordnet. Die Verbindungsteile weisen unterschiedliche Wandstärken auf, derart, dass das eine Verbindungsteil elastisch verformbar ist, während das andere Verbindungsteil demgegenüber steif ausgebildet ist. Die elastische Verformbarkeit des einstückig ausgeführten Ventilkörpers kann demnach Abstandsänderungen der Ventilsitze, insbesondere unter dem Aspekt tiefer Temperaturen, derart ausgleichen, dass beide Ventilsitze gleichzeitig satt an den Gegenventilsitzen außen anliegen und damit eine einwandfreie Dichtheit gewährleistet ist.

Aus der US2 998 027 ist ein Doppelsitz-Absperrventil bekannt, dass die Merkmale des Oberbegriffs des Patentanspruchs 1 und des Patentanspruchs 2 aufweist. Aus der US 2 117 044 A ist ein Doppelsitz-Absperrventil bekannt, dass die Merkmale des Oberbegriffs des Patentanspruchs 1 aufweist.

Aufgabe der vorliegenden Erfindung ist es, ein Doppelsitz-Absperrventil zu schaffen, dass bei besonders hohen Temperaturen eines im Absperrventil befindlichen Fluids, insbesondere einer Temperatur über 1000 °C, prozesssicher arbeitet.

Gelöst wird die Aufgabe durch ein Doppelsitz-Absperrventil, das gemäß den Merkmalen des Patentanspruchs 1 oder des Patentanspruchs 2 ausgebildet ist.

Das jeweilige Doppelsitz-Absperrventil ist in Eckbauform gestaltet. Demzufolge wird das bei geöffnetem Absperrventil durch dieses strömende Fluid nicht gerade durch das Absperrventil geleitet, sondern im Absperrventil umgeleitet. Das Absperrventil weist ein Ventilgehäuse, das einen über Eck angeordneten Strömungsraum bildet, einen Sitzringkäfig, der im Bereich eines Endes im Ventilgehäuse ortsfest gelagert ist, sowie ein innerhalb des Sitzringkäfigs angeordnetes, mittels eines Antriebs verstellbares Absperrelement auf. Das Absperrelement weist zwei Ventilsitze auf, die in der Schließstellung des Absperrelements zwei Gegenventilsitze des Sitzringkäfigs dichtend kontaktieren. Wesentlich ist bei dem erfindungsgemäßen Absperrventil, dass der Sitzringkäfig im Bereich seines der Lagerung im Ventilgehäuse abgewandten Endes abgedichtet in dem Ventilgehäuse geführt ist.

Der Sitzringkäfig ist somit im Bereich eines Endes stationär gelagert, während der Sitzringkäfig im Bereich seines diesem Ende abgewandten Endes nicht ortsfest gelagert ist, vielmehr im Ventilgehäuse geführt ist. Demzufolge kann in dem Führungsbereich eine Längenänderung des Sitzringkäfigs unter Einwirkung von unterschiedlichen Temperaturen auf den Sitzringkäfig bzw. allgemein auf das Absperrventil ausgeglichen werden. Bei hohen Temperaturen dehnt sich der metallische Sitzringkäfig entsprechend aus und kann sich aufgrund der Führung des Sitzringkäfigs im Ventilgehäuse ungehindert ausdehnen. Bei relativ niedrigen Temperaturen verringert sich die Länge des Sitzringkäfigs und es verändert der Sitzringkäfig entsprechend seine Lage zum Ventilgehäuse im Führungsbereich des Sitzringkäfigs.

Bei dem erfindungsgemäßen Doppelsitz-Absperrventils gemäß Patentanspruch 1 ist vorgesehen, dass der Sitzringkäfig im Bereich seines der Lagerung im Ventilgehäuse abgewandten Endes eine Sitzkontur aufweist und das Ventilgehäuse in diesem Bereich eine Gegensitzkontur aufweist, wobei bei einer definierten Wärmeausdehnung des Sitzringkäfigs die Sitzkontur die Gegensitzkontur kontaktiert.

Bei geschlossenem Absperrventil, bei einer Raumtemperatur, somit eine Temperatur von ungefähr 20 °C, kontaktiert der Sitzkäfig mangels Wärmeausdehnung mit seiner Sitzkontur die Gegensitzkontur nicht. Wird das Absperrventil, ausgehend von dieser Raumtemperatur erwärmt, dehnt sich der Sitzkäfig aus und verlagert sich mit seinem die Sitzkontur aufweisenden Ende in Richtung der Gegensitzkontur des Ventilgehäuses, wobei der Sitzringkäfig im Ventilgehäuse abgedichtet geführt ist.

Das Absperrventil ist so ausgelegt, dass dann, wenn das heiße Gas auf das Absperrventil einwirkt, gerade eine solche Wärmeausdehnung des Sitzkäfigs stattgefunden hat, dass die Sitzkontur des Sitzkäfigs die Gegensitzkontur des Ventilgehäuses kontaktiert, damit eine Abdichtung zwischen Sitzkäfig und Ventilgehäuse in diesem Bereich erfolgt.
Bei dem erfindungsgemäßen Doppelsitz-Absperrventils gemäß Patentanspruch 2 ist vorgesehen, dass der Sitzringkäfig im Bereich der Lagerung des Sitzringkäfigs im Ventilgehäuse einen nach radial außen gerichteten Flansch aufweist, wobei der Flansch in seinem radial äußeren Bereich zwischen dem Ventilgehäuse und einem Ventildeckel eingespannt ist und in seinem radial inneren Bereich axial nachgiebig gestaltet ist.
Diese axiale Nachgiebigkeit lässt sich auf unterschiedlichste Art erzielen, beispielsweise durch eine Materialschwächung oder Rillen. Der Vorteil der axialen Nachgiebigkeit der Lagerung des Sitzringkäfigs in diesem Endbereich des Sitzringkäfigs ist darin zu sehen, dass, bei hohen Temperaturen und damit vorgesehenem abgedichteten Anliegen des Sitzringkäfigs am Ventilgehäuse in dessen der ortsfesten Lagerung abgewandten Bereich, eine gewisse axiale Nachgiebigkeit des Sitzringkäfigs auch in seinem ortsfesten Lagerbereich gewährleistet ist.
Es ist durchaus denkbar und bevorzugt, wenn der Sitzringkäfig im Bereich seines der Lagerung im Ventilgehäuse abgewandten Endes eine Sitzkontur aufweist und das Ventilgehäuse in diesem Bereich eine Gegensitzkontur aufweist, wobei bei einer definierten Wärmeausdehnung des Sitzringkäfigs die Sitzkontur die Gegensitzkontur kontaktiert und der Sitzringkäfig im Bereich der Lagerung des Sitzringkäfigs im Ventilgehäuse einen radial nach außen gerichteten Flansch aufweist, wobei der Flansch in seinem radial äußeren Bereich zwischen dem Ventilgehäuse und einem Ventildeckel eingespannt ist und in seinem radial inneren Bereich axial nachgiebig gestaltet ist.

Bei dem Doppelsitz-Absperrventil handelt es sich insbesondere um eine Großarmatur mit einem Durchtrittsquerschnitt > 500 mm, insbesondere bis zu 1.000 mm.

Das erfindungsgemäße Doppelsitz-Absperrventil findet insbesondere Verwendung bei einer Anlage zum Umwandeln von fester Biomasse in Strom und Wärme. Aus der Biomasse erzeugtes Gasgemisch wird mit Luft verbrannt. Bis zu 1.100 °C heiße, entstehende Rauchgase heizen mehrere Festbett-Regeneratoren auf, die in einem Batchbetrieb somit nicht kontinuierlich aufgeheizt werden. Die Stromerzeugung erfolgt mittels einer Gasturbine, die mittels heißer Luft (Heißwind) betrieben wird. Die Luft wird nach einer adiabatischen Verdichtung im Kompressor der Gasturbine abgekühlt, unter Gewinnung von Prozesswärme, und danach in den Festbett-Regeneratoren auf eine Temperatur von ca. 1.050 °C aufgeheizt. Die heiße, unter einem Druck von 6,5 bar stehende Luft wird anschließend in der Turbine entspannt und mittels eines Generators in elektrische Energie umgewandelt. Bei der Anlage sind mehrere Doppelsitz-Absperrventile zwischen den Festbett-Generatoren und der Turbine angeordnet. Das jeweilige Doppelsitz-Absperrventil ist jeweils ungefähr 60 Minuten geöffnet und anschließend ungefähr 20 Minuten geschlossen. Während der Öffnungszeit strömt die ca. 1.050 °C heiße Luft unter dem hohen Druck von ungefähr 6,5 bar durch das geöffnete Absperrventil.

Es wird als besonders vorteilhaft angesehen, wenn das Absperrelement derart ausgeführt ist, dass es druckentlastet wirksam ist. Unter diesem Aspekt ist das Absperrelement insbesondere als Hohlzylinder ausgelegt, mit einem Lagerbereich zur Anbindung des Antriebes zum Verstellen des Absperrelements.

Die Kontaktierung von Sitzkontur und Gegensitzkontur bei Einwirkung des Fluids auf den Sitzkäfig, insbesondere Einwirkung des Fluids auf den die Sitzkontur aufweisenden Bereich des Sitzkäfigs, erfolgt vorzugsweise bei einer Temperatur von 900° bis 1.200 °C des Fluids, insbesondere bei einer Temperatur von 1.000° bis 1.150 °C. Es wird als besonders vorteilhaft angesehen, wenn das Ventilgehäuse einen Gehäusesitzring aufweist, wobei der Sitzringkäfig in dem Gehäusesitzring abgedichtet geführt ist. Hierdurch lässt sich auf baulich einfache Art und Weise eine präzise, abgedichtete Führung des Sitzringkäfigs im Ventilgehäuse erreichen.

Die Abdichtung zwischen Ventilgehäuse bzw. Gehäusesitzring und Sitzringkäfig kann unmittelbar zwischen diesen erfolgen. Es wird als vorteilhaft angesehen, wenn die genannte Abdichtung über eine separate, zwischen Ventilgehäuse bzw. Gehäusesitzring und Sitzringkäfig angeordnete Dichtung erfolgt. Bei dieser separaten Dichtung handelt es sich beispielsweise um eine Schnur aus Silikat.

Insbesondere ist das Doppelsitz-Absperrventil in Eckbauform derart gestaltet, dass das Ventilgehäuse zwei Anschlussflansche aufweist, die unter einem Winkel von 90° zueinander angeordnet sind.

Gemäß einer bevorzugten Weiterbildung der Erfindung ist vorgesehen, dass mit dem Ventilgehäuse ein Ventildeckel verbunden ist, der eine mittels eines Antriebs betätigbare Stange axial verschieblich aufnimmt, sowie mit der Stange das Absperrelement verbunden ist.

Die ortsfeste Lagerung des Sitzringkäfigs im Ventilgehäuse wird vorzugsweise dadurch bewerkstelligt, dass der Sitzringkäfig zwischen dem Ventilgehäuse und dem Ventildeckel angeordnet ist.

Eine baulich besonders einfache Gestaltung des Absperrelements und des Sitzkäfigs lässt sich insbesondere unter dem Aspekt der Abdichtung verwirklichen, wenn die beiden Ventilsitze des Absperrelements senkrecht zur Verschiebeachse des Absperrelements und rotationssymetrisch zu dieser angeordnet sowie in Verschieberichtung des Absperrelements im Abstand zueinander angeordnet sind, wobei die Ventilsitze als Sitzringe ausgebildet sind, ferner die beiden Gegenventilsitze des Sitzkäfigs als Gegensitzringe ausgebildet sind. Insbesondere ist in Offenstellung des Absperrelements ein Strömungspfad des Fluids durch den Sitzringkäfig gebildet. Dieser Strömungspfad erstreckt sich zwischen dem Bereich der Gegenventilsitze des Sitzringkäfigs und einem Ende des Sitzringkäfigs, das dessen ortsfester Lagerung im Ventilgehäuse abgewandt ist.

Baulich besonders einfach ist der Sitzringkäfig gestaltet, wenn dieser zwei Rohrabschnitte aufweist, die mittels äußerer Axialstreben miteinander fest verbunden sind. In den Bereichen zwischen den Axialstreben tritt das Fluid bei geöffnetem Absperrventil durch den Sitzringkäfig.

Es wird als besonders vorteilhaft angesehen, wenn der Sitzringkäfig im Bereich eines freien Endes eines der Rohrabschnitte in dem Ventilgehäuse geführt ist. Insbesondere ist das freie Ende konisch verjüngend ausgebildet, zur Bildung der Sitzkontur.

Vorzugsweise bestehen das Ventilgehäuse und/oder der Ventildeckel und/oder der Sitzringkäfig und/oder das Absperrelement und/oder die dem Antrieb dienende Stange aus Metall, insbesondere aus einem Hochtemperatur beständigen Metall.

Um die metallischen Komponenten des Doppelsitz-Absperrventils, soweit technisch möglich, bezüglich der hohen Temperatur abzuschirmen und/oder eine große Isolationswirkung bezüglich Wärmeabgabe nach außen zu erreichen, ist das Absperrventil vorzugsweise mit einer Hochtemperatur beständigen und Wärme isolierenden Auskleidung versehen. Insbesondere das Ventilgehäuse und der Ventildeckel sind mit einer Auskleidung versehen.

Weitere Merkmale der Erfindung sind in den Unteransprüchen, der Beschreibung der Figuren und den Figuren selbst dargestellt, wobei bemerkt wird, dass alle Einzelmerkmale und alle Kombinationen von Einzelmerkmalen erfindungswesentlich sind.

In den Figuren ist die Erfindung anhand eines bevorzugten Ausführungsbeispiels dargestellt, ohne hierauf beschränkt zu sein.

Es zeigt:
- Fig. 1: das erfindungsgemäße Doppelsitz-Absperrventil in einer räumlichen Darstellung, geschnitten gemäß der Schnittdarstellung in Figur 3, veranschaulicht für das geöffnete Absperrventil bei Raumtemperatur,
- Fig. 2: das Absperrventil gemäß Fig. 1, in einer Ansicht II in Figur 3, veranschaulicht für das geöffnete Absperrventil bei Raumtemperatur,
- Fig. 3: das Absperrventil in einer Schnittdarstellung gemäß der Linie III in Fig. 2, veranschaulicht für den Zustand des geschlossenen Absperrventils bei Raumtemperatur,
- Fig. 4: einen Teilbereich des in der Schnittdarstellung gemäß Fig. 3 gezeigten Absperrventils, allerdings bei geöffnetem Absperrventil und Raumtemperatur,
- Fig. 5: den Teilbereich gemäß Fig. 4, veranschaulicht bei geschlossenem Absperrventil und Raumtemperatur,
- Fig. 6: einen Teilbereich des in Fig. 5 gezeigten Absperrventils, veranschaulicht für den Zustand des geöffneten Absperrventils bei Raumtemperatur,
- Fig. 7: eine vergrößerte Darstellung des Teilbereiches A in Fig. 6,
- Fig. 8: eine Darstellung des Teilbereiches des Absperrventils gemäß Fig. 6, veranschaulicht für den Zustand des geschlossenen Absperrventils, allerdings bei erhöhter Temperatur im Absperrventil und damit erfolgter Formveränderung des Sitzringkäfigs des Absperrventils,
- Fig. 9: eine vergrößerte Darstellung des Teilbereichs A in Figur 8.

### Figurenbeschreibung

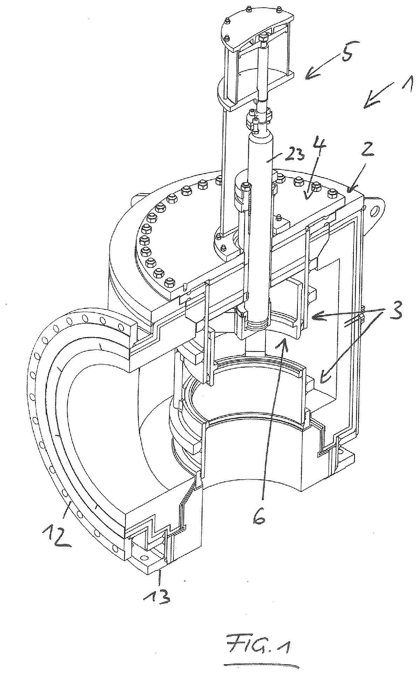

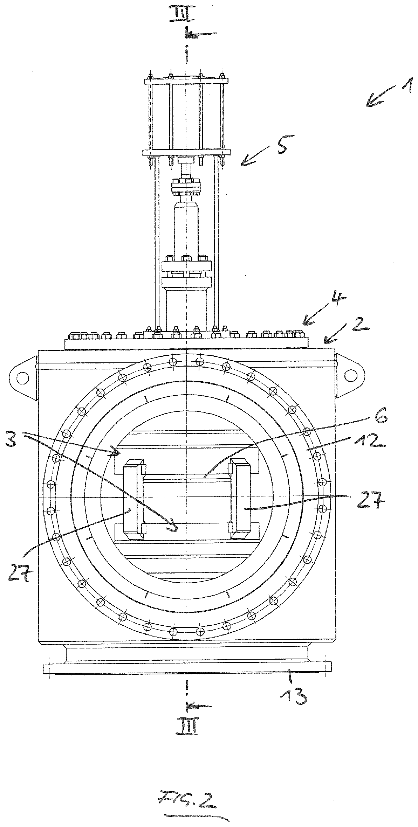

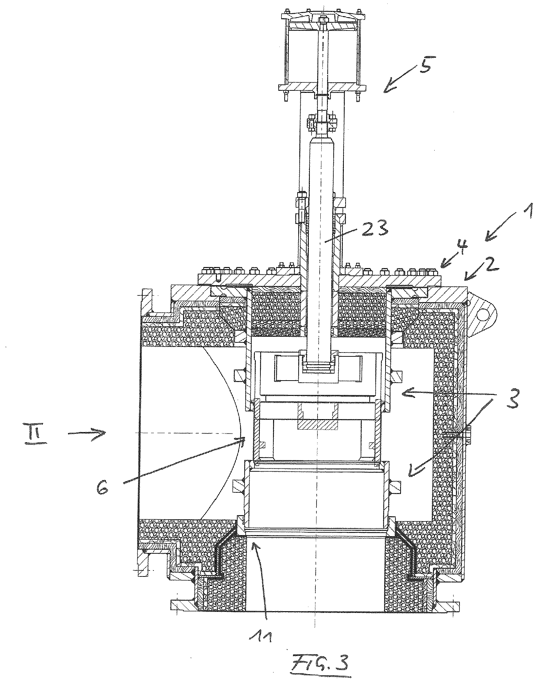

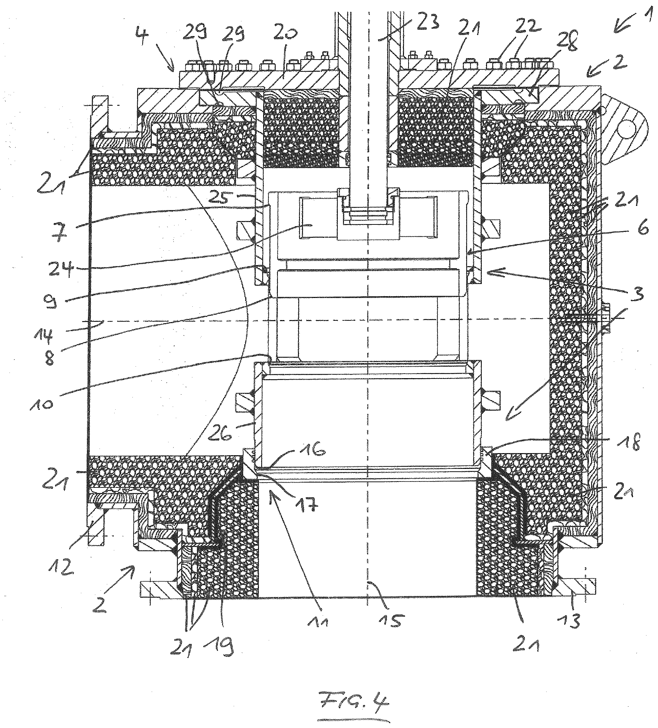

Es wird zunächst auf die Darstellung der Figuren 1 bis 4 Bezug genommen:
Veranschaulicht ist ein Doppelsitz-Absperrventil 1 in Eckbauform. Dieses weist ein Ventilgehäuse 2, einen Sitzringkäfig 3, der im Bereich eines Endes 4 im Ventilgehäuse 2 ortsfest gelagert ist, sowie ein innerhalb des Sitzringkäfigs 3 angeordnetes, mittels eines Antriebs 5 verstellbares Absperrelement 6 auf. Dieses weist zwei Ventilsitze 7, 8 auf, die in der Schließstellung des Absperrelements 6 zwei Gegenventilsitze 9, 10 des Sitzringkäfigs 3 dichtend kontaktieren. Der Sitzringkäfig 3 ist im Bereich seines der Lagerung im Ventilgehäuse abgewandten Endes 11 abgedichtet in dem Ventilgehäuse 2 geführt.

Das Ventilgehäuse 2 weist zwei, einen rechten Winkel einnehmende Flansche 12, 13 zum Anschließen des Absperrventils 1 an Rohrleitungen an. Die Mittelachsen 14, 15 der Flansche 12, 13 schließen einen Winkel von 90 ° miteinander ein. Bezogen auf die Einbaulage des Absperrventils 1 ist der Flansch 13 unten und der Flansch 12 seitlich angeordnet. Die Durchströmrichtung von heißer Luft durch das Absperrventil 1 erfolgt vom unteren Flansch 13 zum seitlichen Flansch 12 mit einer Temperatur von maximal 1.100°C und einem Druck von maximal 6,5 bar. Das Absperrventil 1 wird in aller Regel derart betrieben, dass es sich etwa 60 Minuten in geöffneter Stellung befindet und anschließend etwa 20 Minuten geschlossen wird. Die Luft wird nicht kontinuierlich in einem dem Absperrventil 1 zugeordneten Festbett-Regenerator aufgeheizt, womit mittels des Absperrventils 1 ein Temperaturbereich zwischen der genannten sehr hohen Temperatur von maximal 1.100 °C und einer deutlich geringeren Temperatur, wobei es sich durchaus um Raumtemperatur handeln kann, zu beherrschen ist. Demzufolge sind die Wärmedehnungen, die metallischen Teile des Absperrventils 1 ausgesetzt sind, erheblich.

Unter diesem Aspekt weist der Sitzringkäfig 3 im Bereich seines der Lagerung im Ventilgehäuse 2 abgewandten Endes 11 eine Sitzkontur 16 auf und es weist das Ventilgehäuse 2 in diesem Bereich eine Gegensitzkontur 17 auf. Bei einer definierten Wärmeausdehnung des Sitzringkäfigs 3 kontaktiert die Sitzkontur 16 die Gegensitzkontur 17. Die Kontaktierung der Sitzkontur 16 und der Gegensitzkontur 17 erfolgt insbesondere bei Einwirkung der Luft bzw. eines Fluids auf den Sitzringkäfig 3, insbesondere bei Einwirkung des Fluids auf den die Sitzkontur 16 aufweisenden Bereich des Sitzringkäfigs 3, bei einer Temperatur des Fluids von 900 °C bis 1.200 °C, insbesondere 1.000 bis 1.150 °C. In diesem die Sitzkontur 16 aufnehmenden Bereich des Sitzringkäfigs 3 ist die höchste thermische Beanspruchung und Wärmeausdehnung zu verzeichnen, weil dort im Umlenkbereich des heißen Fluids entlang des ungefähren Strömungpfades von der Mittelachse 15 zur Mittelachse 14 eine höhere thermische Beanspruchung im Absperrventil 1 zu verzeichnen ist als im Bereich des Endes 4 des Absperrventils 1.

Im Detail weist das Ventilgehäuse 2 einen Gehäusesitzring 18 auf. Dieser ist über einen Rohransatz 19 des Ventilgehäuses 2 mit dem den Flansch 13 aufweisenden Abschnitt des Ventilgehäuses 2 verbunden. Um die nicht beweglichen Bestandteile des Absperrventils 1 thermisch zu entlasten, sind diese, insbesondere das Ventilgehäuse 2 im Bereich der beiden Flansche 12, 13, der Rohransatz 19 und ein im Bereich des Antriebs 5 angeordneter Ventildeckel 20 mit einer als Ausmauerung ausgebildeten thermischen Auskleidung 21 versehen. Durch diese kann sichergestellt werden, dass bei einer Temperatur von 1.100 °C im Innenraum des Absperrventils 1 auf der Außenseite des Gehäuses eine maximale Temperatur von 150 °C herrscht.

Der Sitzringkäfig 3 ist im Gehäusesitzring 18 abgedichtet geführt, wobei diese Abdichtung über eine separate Dichtung erfolgt, die beispielsweise als Packungsschnur ausgebildet ist.

Der Ventildeckel 20 ist mit dem Ventilgehäuse 2 mittels einer Vielzahl von Schraubverbindungen 22 verbunden. Der Ventildeckel 20 nimmt eine mittels des Antriebs 5 betätigbare Stange 23, bei der es sich um eine Schubstange handelt, axial verschieblich auf. Mit der Stange 23 ist das Absperrelement 6 verbunden. Dieses ist im Wesentlichen als Hohlzylinder ausgebildet, mit den beiden radial äußeren Ventilsitzen 7 und 8. Radial innen ist das Absperrelement 6 über Stege 24 in der Stange 23 gelagert. Durch diese Gestaltung des Absperrelements 6 ergibt sich eine druckentlastete Wirkung des Fluids auf das Absperrelement 6. Druckkräfte des Fluids werden weitgehend aufgehoben, sodass nur geringe Antriebskräfte zum axialen Verfahren der Stange 23 zwecks Betätigung des Absperrelements 6 erforderlich sind.

Im Detail sind die beiden Ventilsitze 7, 8 des Absperrelements 6 senkrecht zur Verschiebeachse des Absperrelements angeordnet, wobei die Verschiebeachse der Mittelachse 15 entspricht und rotationssymmetrisch zu dieser Verschiebeachse angeordnet, ferner in Verschieberichtung des Absperrelements 6 in Abstand zueinander angeordnet. Die Ventilsitze 7, 8 sind als Sitzringe ausgebildet, somit umlaufend, und es sind die beiden Gegenventilsitze 9, 10 des Sitzringkäfigs 3 als Gegensitzringe ausgebildet.

Der Sitzringkäfig 3 weist zwei Rohrabschnitte 25, 26 auf, die mittels äußerer Axialstreben 27 miteinander fest verbunden sind. Die beiden Rohrabschnitte 25, 26, sind rotationssymmetrisch zur Mittelachse 15 angeordnet und fluchten. Der Rohrabschnitt 26 weist im Bereich des Endes 11 die Sitzkontur 16 auf, die ringförmig ist, zum Zusammenwirken mit der ringförmigen Gegensitzkontur 17. Im Bereich dieses freien Endes ist der Sitzringkäfig 3 in dem Gehäusesitzring 18 geführt, wobei das freie Ende des Rohrabschnitts 26 konisch verjüngend zur Bildung der Sitzkontur 16 ausgebildet ist. Entsprechend ist der Gehäusesitzring 18 konisch verjüngend zur Formung der Gegensitzkontur 17 ausgebildet.

Der Sitzringkäfig 3 weist im Bereich der Lagerung des Sitzringkäfigs 3 im Ventilgehäuse 2 einen radial nach außen gerichteten Flansch 28 auf. Der Flansch 28 ist mit dem Rohrabschnitt 25 verbunden. Der Flansch 28 ist in seinem radial äußeren Bereich zwischen dem Ventilgehäuse 2 und dem Ventildeckel 20 eingespannt und in seinem radial inneren Bereich axial nachgiebig gestaltet. Die Nachgiebigkeit wird beispielsweise durch eine Materialschwächung des Flansches 28 erzeugt, wie es für die konzentrisch zur Mittelachse 15 angeordneten Rillen 29 im Flansch 28 veranschaulicht ist.

Alle Teile des Absperrventils 1, bis auf die beschriebene Auskleidung 21, bestehen aus Metall, wobei diejenigen Bereiche des Absperrventils 1, die aus Metall bestehen und der hohen Temperatur ausgesetzt sind, aus hoch festem Metall bestehen.

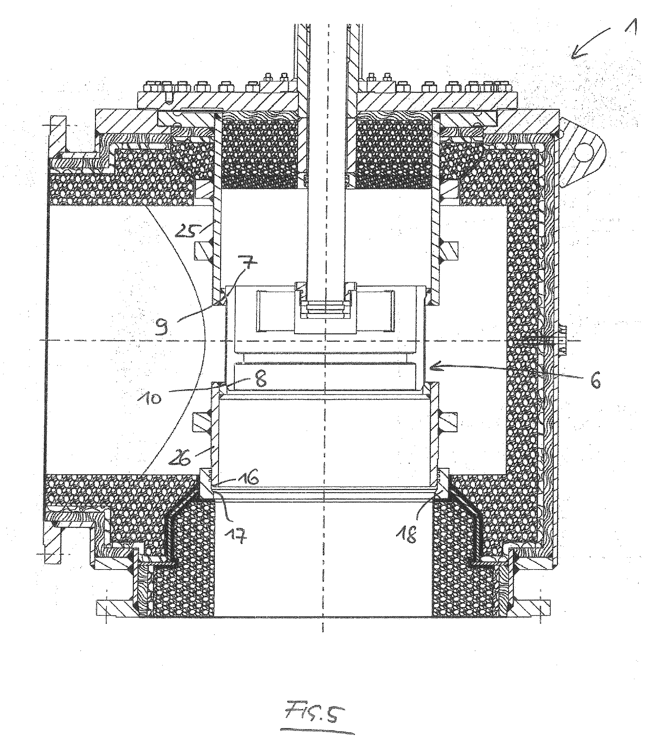

Die Wirkungsweise des Doppelsitz-Absperrventils 1 ist insbesondere in den Fig. 5 bis 9 veranschaulicht:
Fig. 5 zeigt das Absperrventil 1 in geschlossener Stellung bei Raumtemperatur. Bei dieser niedrigen Temperatur ist keine Ausdehnung der Metallteile des Absperrventils 1 zu verzeichnen, womit der Sitzringkäfig 3 eine relativ kürzere Länge aufweist, mit der Konsequenz, dass bei axial festgelegter Position des Flansches 28 des Sitzringkäfigs 3 sich das Ende 11 des Sitzringkäfigs 3 zwar abgedichtet geführt im Bereich des Gehäusesitzrings 18 befindet, aber die Sitzkontur 16 des Sitzringkäfigs 3 in Abstand zur Gegensitzkontur 17 des Gehäusesitzrings 18 angeordnet ist.

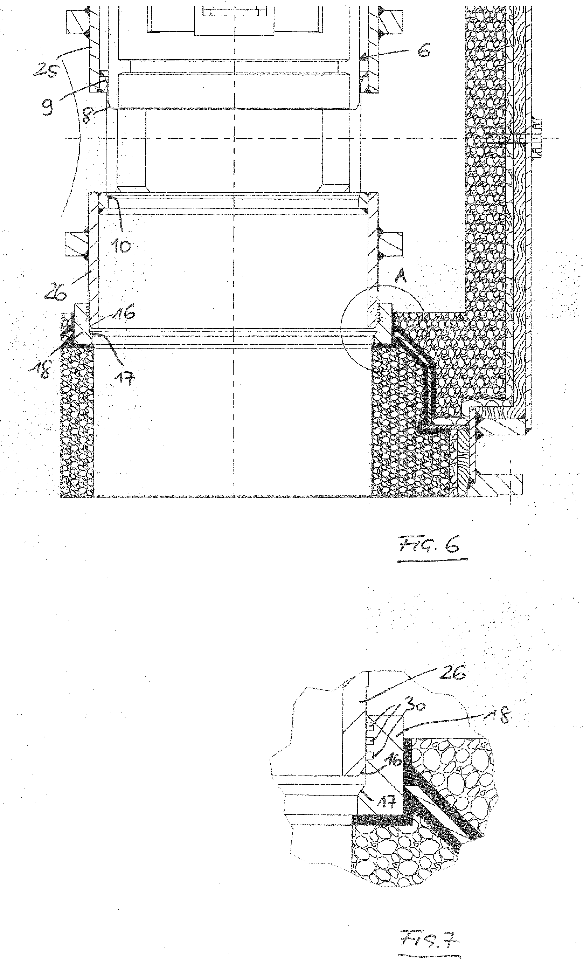

Fig. 6 veranschaulicht grundsätzlich die Situation gemäß Fig. 5, allerdings bei geöffnetem Absperrventil 1, somit in einer Stellung des Absperrelements 6, in der die Ventilsitze 7 und 8 außer Kontakt mit den Gegenventilsitzen 9 und 10 sind.
Fig. 7 veranschaulicht in vergrößerter Darstellung den Teilbereich A gemäß Fig. 6, somit die Führung des Sitzringkäfigs 3 in dem Gehäusesitzring 18, ohne dass sich die Sitzkontur 16 und die Gegensitzkontur 17 kontaktieren. Sie sind vielmehr in einem relativ großen Abstand zueinander positioniert. Zusätzlich ist veranschaulicht, dass der Gehäusesitzring 18 mit drei radial inneren Nuten 30 versehen ist, die der Aufnahme einer Packungsschnur, die insbesondere aus Silikat besteht, zwecks besserer Abdichtung dienen.

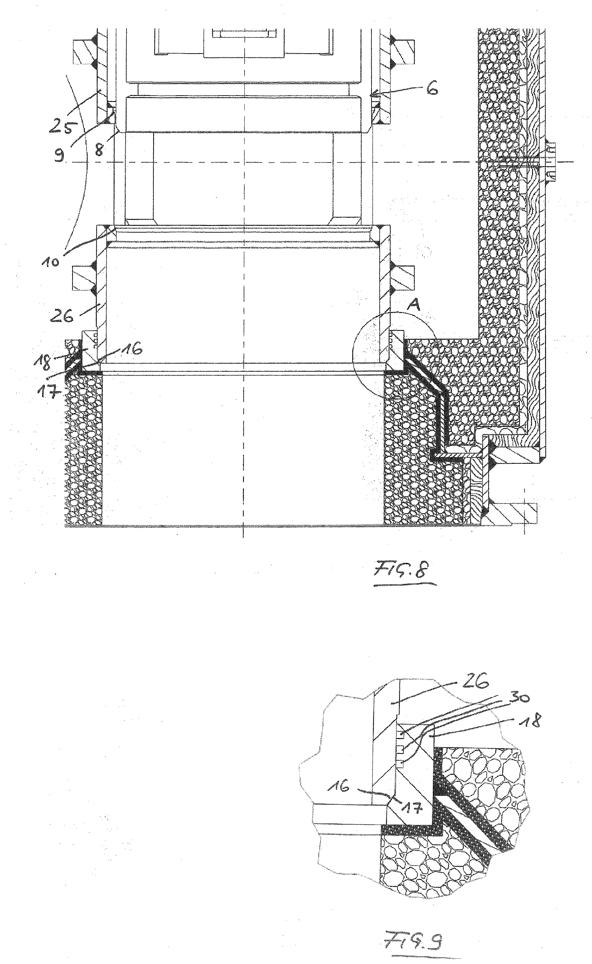

Fig. 8 veranschaulicht gleichfalls den Zustand des geöffneten Absperrventils 1, allerdings bei hoher Temperatur des Fluids bzw. der heißen Luft, konkret einer Temperatur von ungefähr 1.100 °C. Diese Luft erwärmt insbesondere den unteren Bereich des Absperrventils 1, somit den Endes 11. Dies führt dazu, dass sich der über eine relativ große axiale Länge erstreckende Sitzringkäfig 3 in der Richtung der Mittelachse 15 ausdehnt, mit der Konsequenz, dass, wie zu Fig. 8 veranschaulicht, die Sitzkontur 16 und die Gegensitzkontur 17 sich kontaktieren. Hierdurch wird in diesem Bereich eine hohe Abdichtung erzielt. Dehnt sich der Sitzringkäfig 3, bei Kontaktierung von Sitzkontur 16 und Gegensitzkontur 17, geringfügig weiter aus, kann dies durch Verformung des Flansches 28 des Sitzringkäfigs 3 kompensiert werden, aufgrund der in den Flansch 28 eingebrachten Rillen 29, die eine gewisse Biegung des Flansches 20 gestatten.

Das beschriebene Doppelsitz-Absperrventil 1 ist somit hervorragend geeignet, bei Anordnung in Eckbauform bei druckentlastet wirksamen Absperrelement 6, prozesssicher bei hohen Temperaturen zu arbeiten, wobei es für die Funktionalität des Absperrventils 1 von besonderer Bedeutung ist, dass die Prozesssicherheit bei dem hohen Temperaturbereich von 900 bis 1.200 °C und bei einem hohen Fluiddruck, der bis zu 6,5 bar beträgt, gewährleistet ist.

### Bezugszeichenliste

- 1: Doppelsitz-Absperrventil / Absperrventil
- 2: Ventilgehäuse
- 3: Sitzringkäfig
- 4: Ende
- 5: Antrieb
- 6: Absperrelement
- 7: Ventilsitz
- 8: Ventilsitz
- 9: Gegenventilsitz
- 10: Gegenventilsitz
- 11: Ende
- 12: Flansch
- 13: Flansch
- 14: Mittelachse
- 15: Mittelachse
- 16: Sitzkontur
- 17: Gegensitzkontur
- 18: Gehäusesitzring
- 19: Rohransatz
- 20: Ventildeckel
- 21: Auskleidung
- 22: Schraubverbindung
- 23: Stange
- 24: Steg
- 25: Rohrabschnitt
- 26: Rohrabschnitt
- 27: Axialstrebe
- 28: Flansch
- 29: Rille
- 30: Nut

## Patentansprüche

1. Doppelsitz-Absperrventil (1) in Eckbauform, mit einem Ventilgehäuse (2), einem Sitzringkäfig (3), der im Bereich eines Endes (4) im Ventilgehäuse (2) ortsfest gelagert ist, sowie einem innerhalb des Sitzringkäfigs (3) angeordneten, mittels eines Antriebs (5) verstellbaren Absperrelement (6), das zwei Ventilsitze (7, 8) aufweist, die in der Schließstellung des Absperrelements (6) zwei Gegenventilsitze (9, 10) des Sitzringkäfigs (3) dichtend kontaktieren, wobei der Sitzringkäfig (3) im Bereich seines der Lagerung im Ventilgehäuse (2) abgewandten Endes (11) abgedichtet in dem Ventilgehäuse (2) geführt ist, wobei das Ventilgehäuse (2) einen über Eck angeordneten Strömungsraum bildet, **dadurch gekennzeichnet, dass** der Sitzringkäfig (3) im Bereich seines der Lagerung im Ventilgehäuse (2) abgewandten Endes (11) eine Sitzkontur (16) aufweist und das Ventilgehäuse (2) in diesem Bereich eine Gegensitzkontur (17) aufweist, wobei bei einer definierten Wärmeausdehnung des Sitzringkäfigs (3) die Sitzkontur (16) die Gegensitzkontur (17) kontaktiert.

2. Doppelsitz-Absperrventil (1) in Eckbauform, mit einem Ventilgehäuse (2), einem Sitzringkäfig (3), der im Bereich eines Endes (4) im Ventilgehäuse (2) ortsfest gelagert ist, sowie einem innerhalb des Sitzringkäfigs (3) angeordneten, mittels eines Antriebs (5) verstellbaren Absperrelement (6), das zwei Ventilsitze (7, 8) aufweist, die in der Schließstellung des Absperrelements (6) zwei Gegenventilsitze (9, 10) des Sitzringkäfigs (3) dichtend kontaktieren, wobei der Sitzringkäfig (3) im Bereich seines der Lagerung im Ventilgehäuse (2) abgewandten Endes (11) abgedichtet in dem Ventilgehäuse (2) geführt ist, wobei das Ventilgehäuse (2) einen über Eck angeordneten Strömungsraum bildet, wobei der Sitzringkäfig (3) im Bereich der Lagerung des Sitzringkäfigs (3) im Ventilgehäuse (2) einen nach radial außen gerichteten Flansch (28) aufweist, wobei der Flansch (28) in seinem radial äußeren Bereich zwischen dem Ventilgehäuse (2) und einem Ventildeckel (20) eingespannt ist; **dadurch gekennzeichnet, dass** der Flansch (28) in seinem radial inneren Bereich axial nachgiebig gestaltet ist.

3. Doppelsitz-Absperrventil (1) nach Anspruch 1, **dadurch gekennzeichnet, dass** der Sitzringkäfig (3) im Bereich der Lagerung des Sitzringkäfigs (3) im Ventilgehäuse (2) einen nach radial außen gerichteten Flansch (28) aufweist, wobei der Flansch (28) in seinem radial äußeren Bereich zwischen dem Ventilgehäuse (2) und einem Ventildeckel (20) eingespannt ist und in seinem radial inneren Bereich axial nachgiebig gestaltet ist.

4. Doppelsitz-Absperrventil (1) nach einem der Ansprüche 1 bis 3, **dadurch gekennzeichnet, dass** das Absperrelement (6) druckentlastet wirksam ist.

5. Doppelsitz-Absperrventil (1) nach einem der Ansprüche 1, 3, 4, **dadurch gekennzeichnet, dass** die Kontaktierung von Sitzkontur (16) und Gegensitzkontur (17) bei Einwirkung eines Fluids auf den Sitzringkäfig (3), insbesondere Einwirkung eines Fluids auf den die Sitzkontur (16) aufweisenden Bereich des Sitzringkäfigs (3), bei einer Temperatur des Fluids von 900° bis 1.200 °C, insbesondere 1.000° bis 1.150 °C, erfolgt.

6. Doppelsitz-Absperrventil (1) nach einem der Ansprüche 1 bis 5, **dadurch gekennzeichnet, dass** das Ventilgehäuse (2) einen Gehäusesitzring (18) aufweist, wobei der Sitzringkäfig (3) in dem Gehäusesitzring (18) abgedichtet geführt ist.

7. Doppelsitz-Absperrventil (1) nach einem der Ansprüche 1 bis 6, **dadurch gekennzeichnet, dass** die Abdichtung zwischen Ventilgehäuse (2) bzw. Gehäusesitzring (18) und Sitzringkäfig (3) unmittelbar zwischen diesen oder über eine separate zwischen diesen angeordnete Dichtung erfolgt.

8. Doppelsitz-Absperrventil (1) nach einem der Ansprüche 1 bis 7, **dadurch gekennzeichnet, dass** das Ventilgehäuse (2) zwei Flansche (12, 13) zum Anschließen des Absperrventils (1) aufweist, die unter einem Winkel von 90 ° zueinander angeordnet sind.

9. Doppelsitz-Absperrventil (1) nach einem der Ansprüche 1 bis 8, **dadurch gekennzeichnet, dass** mit dem Ventilgehäuse (2) ein Ventildeckel (20) verbunden ist, der eine mittels des Antriebs (5) betätigbare Stange (23) axial verschieblich aufnimmt, sowie mit der Stange (23) das Absperrelement (6) verbunden ist.

10. Doppelsitz-Absperrventil (1) nach einem der Ansprüche 1 bis 9, **dadurch gekennzeichnet, dass** die beiden Ventilsitze (7, 8) des Absperrelements (6) senkrecht zur Verschiebeachse (15) des Absperrelements (6) und rotationssymetrisch zu dieser angeordnet sind, sowie in Verschieberichtung des Absperrelements (6) in Abstand zueinander angeordnet sind, wobei die Ventilsitze (7, 8) als Sitzringe ausgebildet sind, ferner die beiden Gegenventilsitze (9, 10) des Sitzringkäfigs (3) als Gegensitzringe ausgebildet sind.

11. Doppelsitz-Absperrventil (1) nach einem der Ansprüche 1 bis 10, **dadurch gekennzeichnet, dass** in Offenstellung des Absperrelements (6) ein Strömungspfad des Fluids durch den Sitzringkäfig (3), zwischen dessen Bereich der Gegenventilsitze (9, 10) und einem Ende (11) des Sitzringkäfigs (3), das dessen ortsfester Lagerung im Ventilgehäuse (2) abgewandt ist, gebildet ist.

12. Doppelsitz-Absperrventil (1) nach einem der Ansprüche 1 bis 11, **dadurch gekennzeichnet, dass** der Sitzringkäfig (3) zwei Rohrabschnitte (25, 26), die mittels äußerer Axialstreben (27) miteinander fest verbunden sind, aufweist.

13. Doppelsitz-Absperrventil (1) nach Anspruch 12, **dadurch gekennzeichnet, dass** der Sitzringkäfig (3) im Bereich eines freien Endes eines der Rohrabschnitte (26) in dem Ventilgehäuse (2) geführt ist, insbesondere das freie Ende konisch verjüngend zur Bildung der Sitzkontur (16) ausgebildet ist.

14. Doppelsitz-Absperrventil (1) nach einem der Ansprüche 1 bis 13, **dadurch gekennzeichnet, dass** das Ventilgehäuse (2) und/oder der Ventildeckel (20) und/oder der Sitzringkäfig (3) und/oder das Absperrelement (6) und/oder die dem Antrieb (5) dienende Stange (23) aus Metall, insbesondere aus Hochtemperatur beständigem Metall bestehen.

15. Doppelsitz-Absperrventil (1) nach einem der Ansprüche 1 bis 14, **dadurch gekennzeichnet, dass** dieses mit einer Hochtemperatur beständigen und wärmeisolierenden Auskleidung (21) versehen ist, insbesondere das Ventilgehäuse (2) und der Ventildeckel (20) mit der Auskleidung (21) versehen sind.

## Claims

1. Double seat shut-off valve (1) of corner-type design having a valve housing (2), having a seat-ring cage (3) which is mounted in the valve housing (2) in a positionally fixed manner in the region of one end (4), and also having a shut-off element (6) which is arranged inside the seat-ring cage (3) and is displaceable by means of a drive (5) and which has two valve seats (7, 8) which, in the closed position of the shut-off element (6), come into contact in a sealing manner with two mating valve seats (9, 10) of the seat-ring cage (3), wherein the seat-ring cage (3) is guided in the valve housing (2) in a sealed manner in the region of that end (11) of said cage which is remote from the mounting in the valve housing (2), wherein the valve housing (2) forms a flow space with a corner arrangement, **characterized in that** the seat-ring cage (3) has a seat contour (16) in the region of that end (11) of said cage which is remote from the mounting in the valve housing (2), and the valve housing (2) has a mating seat contour (17) in said region, wherein during a defined thermal expansion of the seat-ring cage (3), the seat contour (16) comes into contact with the mating seat contour (17).

2. Double seat shut-off valve (1) of corner-type design having a valve housing (2), having a seat-ring cage (3) which is mounted in the valve housing (2) in a positionally fixed manner in the region of one end (4), and also having a shut-off element (6) which is arranged inside the seat-ring cage (3) and is displaceable by means of a drive (5) and which has two valve seats (7, 8) which, in the closed position of the shut-off element (6), come into contact in a sealing manner with two mating valve seats (9, 10) of the seat-ring cage (3), wherein the seat-ring cage (3) is guided in the valve housing (2) in a sealed manner in the region of that end (11) of said cage which is remote from the mounting in the valve housing (2), wherein the valve housing (2) forms a flow space with a corner arrangement, wherein the seat-ring cage (3) has a radially outwardly directed flange (28) in the region of the mounting of the seat-ring cage (3) in the valve housing (2), wherein in its radially outer region, the flange (28) is clamped between the valve housing (2) and a valve cover (20), **characterized in that** the flange (28) is designed to be axially flexible in its radially inner region.

3. Double seat shut-off valve (1) according to Claim 1, **characterized in that** the seat-ring cage (3) has a radially outwardly directed flange (28) in the region of the mounting of the seat-ring cage (3) in the valve housing (2), wherein in its radially outer region, the flange (28) is clamped between the valve housing (2) and a valve cover (20) and is designed to be axially flexible in its radially inner region.

4. Double seat shut-off valve (1) according to one of Claims 1 to 3, **characterized in that** the shut-off element (6) is effective in a pressure-balanced manner.

5. Double seat shut-off valve (1) according to one of Claims 1, 3, 4, **characterized in that** the contact of the seat contour (16) and the mating seat contour (17) takes place when a fluid acts on the seat-ring cage (3), in particular when a fluid acts on that region of the seat-ring cage (3) which has the seat contour (16), at a temperature of the fluid of 900° to 1200°C, in particular 1000° to 1150°C.

6. Double seat shut-off valve (1) according to one of Claims 1 to 5, **characterized in that** the valve housing (2) has a housing seat ring (18), wherein the seat-ring cage (3) is guided in the housing seat ring (18) in a sealed manner.

7. Double seat shut-off valve (1) according to one of Claims 1 to 6, **characterized in that** the sealing between the valve housing (2) or the housing seat ring (18) and the seat-ring cage (3) is realized directly therebetween or via a separate seal arranged therebetween.

8. Double seat shut-off valve (1) according to one of Claims 1 to 7, **characterized in that** the valve housing (2) has two flanges (12, 13) for connecting the shut-off valve (1) which are arranged at angle of 90° to one another.

9. Double seat shut-off valve (1) according to one of Claims 1 to 8, **characterized in that** connected to the valve housing (2) is a valve cover (20) which accommodates in an axially displaceable manner a rod (23) which is actuable by means of the drive (5), and connected to the rod (23) is the shut-off element (6).

10. Double seat shut-off valve (1) according to one of Claims 1 to 9, **characterized in that** the two valve seats (7, 8) of the shut-off element (6) are arranged perpendicularly to the displacement axis (15) of the shut-off element (6) and in a rotationally symmetrical manner with respect thereto, and also are arranged at a distance from one another in the displacement direction of the shut-off element (6), wherein the valve seats (7, 8) are designed as seat rings, and also the two mating valve seats (9, 10) of the seat-ring cage (3) are designed as mating seat rings.

11. Double seat shut-off valve (1) according to one of Claims 1 to 10, **characterized in that**, in the open position of the shut-off element (6), a flow path of the fluid is formed through the seat-ring cage (3) between its region of the mating valve seats (9, 10) and one end (11) of the seat-ring cage (3), which end is remote from the positionally fixed mounting of said cage in the valve housing (2).

12. Double seat shut-off valve (1) according to one of Claims 1 to 11, **characterized in that** the seat-ring cage (3) has two tube sections (25, 26) which are fixedly connected to one another by means of outer axial struts (27).

13. Double seat shut-off valve (1) according to Claim 12, **characterized in that** the seat-ring cage (3) is guided in the valve housing (2) in the region of a free end of one of the tube sections (26), in particular the free end is designed so as to taper conically for the purpose of forming the seat contour (16).

14. Double seat shut-off valve (1) according to one of Claims 1 to 13, **characterized in that** the valve housing (2) and/or the valve cover (20) and/or the seat-ring cage (3) and/or the shut-off element (6) and/or the rod (23) serving the drive (5) consist of metal, in particular of high-temperature-resistant metal.

15. Double seat shut-off valve (1) according to one of Claims 1 to 14, **characterized in that** said valve is provided with a high-temperature-resistant and thermally insulating liner (21), in particular the valve housing (2) and the valve cover (20) are provided with the liner (21).

## Revendications

1. Vanne d'arrêt à double siège (1) en forme d'angle, avec un corps de vanne (2), une cage de bague de siège (3), qui est montée de façon fixe dans la région d'une extrémité (4) dans le corps de vanne (2), ainsi qu'avec un élément d'arrêt (6) disposé à l'intérieur de la cage de bague de siège (3) et déplaçable au moyen d'un entraînement (5), qui présente deux sièges de vanne (7, 8), qui dans la position de fermeture de l'élément d'arrêt (6) sont en contact étanche avec deux sièges de vanne conjugués (9, 10) de la cage de bague de siège (3), dans laquelle la cage de bague de siège (3) est guidée dans la région de son extrémité (11) opposée à l'appui dans le corps de vanne (2) de façon étanche dans le corps de vanne (2), dans laquelle le corps de vanne (2) forme une chambre d'écoulement agencée en angle, **caractérisée en ce que** la cage de bague de siège (3) présente un contour de siège (16) dans la région de son extrémité (11) opposée à l'appui dans le corps de vanne (2) et le corps de vanne (2) présente dans cette région un contour de siège conjugué (17), dans laquelle lors d'une dilatation thermique définie de la cage de bague de siège (3) le contour de siège (16) est en contact avec le contour de siège conjugué (17).

2. Vanne d'arrêt à double siège (1) en forme d'angle, avec un corps de vanne (2), une cage de bague de siège (3), qui est montée de façon fixe dans la région d'une extrémité (4) dans le corps de vanne (2), ainsi qu'avec un élément d'arrêt (6) disposé à l'intérieur de la cage de bague de siège (3) et déplaçable au moyen d'un entraînement (5), qui présente deux sièges de vanne (7, 8), qui dans la position de fermeture de l'élément d'arrêt (6) sont en contact étanche avec deux sièges de vanne conjugués (9, 10) de la cage de bague de siège (3), dans laquelle la cage de bague de siège (3) est guidée dans la région de son extrémité (11) opposée à l'appui dans le corps de vanne (2) de façon étanche dans le corps de vanne (2), dans laquelle le corps de vanne (2) forme une chambre d'écoulement agencée en angle, dans laquelle la cage de bague de siège (3) présente dans la région de l'appui de la cage de bague de siège (3) dans le corps de vanne (2) une bride (28) orientée radialement vers l'extérieur, dans laquelle la bride (28) est serrée dans sa région radialement extérieure entre le corps de vanne (2) et un couvercle de vanne (20), **caractérisée en ce que** la bride (28) est réalisée sous forme axialement élastique dans sa région radialement intérieure.

3. Vanne d'arrêt à double siège (1) selon la revendication 1, **caractérisée en ce que** la cage de bague de siège (3) présente dans la région de l'appui de la cage de bague de siège (3) dans le corps de vanne (2) une bride (28) orientée radialement vers l'extérieur, dans laquelle la bride (28) est serrée dans sa région radialement extérieure entre le corps de vanne (2) et un couvercle de vanne (20) et est réalisée sous forme axialement élastique dans sa région radialement intérieure.

4. Vanne d'arrêt à double siège (1) selon l'une quelconque des revendications 1 à 3, **caractérisée en ce que** l'élément d'arrêt (6) est actif de façon détendue.

5. Vanne d'arrêt à double siège (1) selon l'une quelconque des revendications 1, 3, 4, **caractérisée en ce que** la mise en contact du contour de siège (16) et du contour de siège conjugué (17) se produit par l'action d'un fluide sur la cage de bague de siège (3), en particulier par l'action d'un fluide sur la région de la cage de bague de siège (3) présentant le contour de siège (16), à une température du fluide de 900° à 1200°C, en particulier de 1000° à 1150°C.

6. Vanne d'arrêt à double siège (1) selon l'une quelconque des revendications 1 à 5, **caractérisée en ce que** le corps de vanne (2) présente une bague de siège de corps (18), dans laquelle la cage de bague de siège (3) est guidée de façon étanche dans la bague de siège de corps (18).

7. Vanne d'arrêt à double siège (1) selon l'une quelconque des revendications 1 à 6, **caractérisée en ce que** l'étanchéité entre le corps de vanne (2) ou la bague de siège de corps (18) et la cage de bague de siège (3) est réalisée directement entre ceux-ci ou au moyen d'un joint séparé disposé entre ceux-ci.

8. Vanne d'arrêt à double siège (1) selon l'une quelconque des revendications 1 à 7, **caractérisée en ce que** le corps de vanne (2) présente deux brides (12, 13) pour le raccordement de la vanne d'arrêt (1), qui sont disposées sous un angle de 90° l'une par rapport à l'autre.

9. Vanne d'arrêt à double siège (1) selon l'une quelconque des revendications 1 à 8, **caractérisée en ce qu'**un couvercle de vanne (20) est assemblé au corps de vanne (2) et comporte une tige mobile axialement (23) actionnable au moyen de l'entraînement (5), et l'élément d'arrêt (6) est relié à la tige (23).

10. Vanne d'arrêt à double siège (1) selon l'une quelconque des revendications 1 à 9, **caractérisée en ce que** les deux sièges de vanne (7, 8) de l'élément d'arrêt (6) sont disposés perpendiculairement à l'axe de déplacement (15) de l'élément d'arrêt (6) et de façon symétrique en rotation par rapport à celui-ci, et ils sont disposés à distance l'un de l'autre dans la direction de déplacement de l'élément d'arrêt (6), dans laquelle les sièges de vanne (7, 8) sont réalisés en forme de bagues de siège, en outre les deux sièges de vanne conjugués (9, 10) de la cage de bague de siège (3) sont réalisés en forme de bagues de siège conjuguées.

11. Vanne d'arrêt à double siège (1) selon l'une quelconque des revendications 1 à 10, **caractérisée en ce que** dans la position ouverte de l'élément d'arrêt (6) un chemin d'écoulement du fluide est formé à travers la cage de bague de siège (3), entre sa région des sièges de vanne conjugués (9, 10) et une extrémité (11) de la cage de bague de siège (3), qui est opposée à son appui fixe dans le corps de vanne (2).

12. Vanne d'arrêt à double siège (1) selon l'une quelconque des revendications 1 à 11, **caractérisée en ce que** la cage de bague de siège (3) présente deux sections tubulaires (25, 26), qui sont reliées l'une à l'autre de façon fixe au moyen d'entretoises axiales extérieures (27).

13. Vanne d'arrêt à double siège (1) selon la revendication 12, **caractérisée en ce que** la cage de bague de siège (3) est guidée dans la région d'une extrémité libre d'une des sections tubulaires (26) dans le corps de vanne (2), en particulier l'extrémité libre est de forme conique décroissante pour la formation du contour de siège (16).

14. Vanne d'arrêt à double siège (1) selon l'une quelconque des revendications 1 à 13, **caractérisée en ce que** le corps de vanne (2) et/ou le couvercle de vanne (20) et/ou la cage de bague de siège (3) et/ou l'élément d'arrêt (6) et/ou la tige (23) assurant l'entraînement (5) sont constitué(e)s de métal, en particulier de métal résistant aux hautes températures.

15. Vanne d'arrêt à double siège (1) selon l'une quelconque des revendications 1 à 14, **caractérisée en ce que** celle-ci est munie d'un revêtement résistant aux hautes températures et thermiquement isolant (21), en particulier le corps de vanne (2) et le couvercle de vanne (20) sont munis du revêtement (21).
